# FASCICULE DE BREVET EUROPEEN

(11) **EP 1 591 195 B1**
(45) Date de publication et mention de la délivrance du brevet: **24.01.2007**
(21) Numéro de dépôt: 05075912.5
(22) Date de dépôt: 19.04.2005
(51) Int. Cl.: B23Q 3/04, B23Q 3/06, B23Q 15/02

(54) **Système d'usinage de panneaux stratifiés**
System zum Bearbeiten von Schicht-Platten
System for machining stratified panels

(30) Priorité: 30.04.2004 ES 200401035
(43) Date de publication de la demande: 02.11.2005
(73) Titulaire: Torres Martinez, Manuel, E-31007 Pamplona (ES)
(72) Inventeur: Torres Martinez, Manuel, E-31007 Pamplona (ES)
(74) Mandataire: Burbaud, Eric

(56) Documents cités:
- DE-A1- 19 745 145
- US-A- 3 483 795
- US-A- 3 587 391

## Description

### Domaine de la technique

La présente invention concerne le fraisage de panneaux stratifiés de grandes dimensions et de faible épaisseur et propose un système permettant de réaliser, dans des conditions d'application avantageuses, un fraisage mécanique pour éliminer un excès de matière desdits panneaux dans le but d'en réduire le poids.

### Etat de la technique

Dans la construction d'aéronefs, on utilise de grands panneaux avec lesquels on réalise le revêtement de l'ossature de l'ensemble structurel de façon à ce que, vu la nécessité de minimiser le poids de la construction - un facteur fondamental dans le domaine de l'aéronautique -, les panneaux de construction se combinent avec une épaisseur qui procure la résistance nécessaire mais qui soit en même temps partout la plus petite possible, afin de réduire le poids.

Or, le revêtement de construction des aéronefs ne présente pas une épaisseur uniforme du fait de la présence de zones qui doivent offrir une plus grande résistance et donc une épaisseur plus importante, comme, par exemple, les cercles des ouvertures destinées aux portes et aux fenêtres, ainsi que toutes les zones destinées à établir des points d'ancrage structurels, ce qui fait que les panneaux des revêtements sont fabriqués avec une épaisseur qui correspond à celle des zones qui présentent l'épaisseur maximale requise, l'excès de matière des zones ne nécessitant pas une telle épaisseur étant ensuite éliminé.

Dans le but de réduire l'épaisseur des panneaux dans les zones où l'épaisseur requise est inférieure à l'épaisseur de fabrication, il existe un procédé de fraisage chimique et un procédé de fraisage mécanique.

Le fraisage chimique consiste à revêtir les zones du panneau qui doivent être plus épaisses d'une matière antidécapante de manière à ce que, une fois le panneau plongé dans de l'acide, les zones non revêtues se corrodent en produisant ainsi une réduction d'épaisseur dans lesdites zones. Ce procédé présente l'inconvénient de nécessiter l'utilisation d'une grande quantité de produit chimique et de générer une grande quantité de résidus polluants.

Le document US 3587391 décrit un système de fraisage mécanique selon le préambule de la revendication 1.

Si le fraisage mécanique ne présente pas ces inconvénients, il provoque toutefois des déformations dans les zones usinées du fait de l'épaisseur réduite des panneaux à usiner et de la force que la tête d'usinage doit exercer sur ces panneaux.

### Objet de l'invention

Selon la présente invention, on propose un système permettant, grâce à un fraisage mécanique, de réduire l'épaisseur de panneaux stratifiés dans des zones déterminées de ceux-ci, ledit système étant développé conformément à une réalisation constructive qui apporte des caractéristiques fonctionnelles particulièrement avantageuses pour son application, pour remédier ainsi aux inconvénients posés par les solutions traditionnelles de même fonction.

Ce système objet de l'invention comporte une tête composée de deux corps, l'un deux, appelé plongeur, comportant l'outil d'usinage, et l'autre, appelé poussoir, qui sert de matrice résistante par rapport au point où s'effectue l'usinage.

Le plongeur se compose d'un ensemble télescopique élastique destiné à s'appuyer de manière flottante sur la surface à usiner et à s'adapter au relief de celle-ci, ce qui permet ainsi d'effectuer un déplacement roulant sur la surface d'usinage, aux fins duquel il comporte des billes sur le devant, au moyen desquelles s'effectue l'appui sur la surface de la pièce.

Le poussoir comporte quant à lui un système de mesure permettant de déterminer l'épaisseur de la zone d'usinage afin de piloter, par le biais d'une commande automatique, l'actionnement de l'outil d'usinage en fonction d'une programmation, cet élément pouvant comporter à son tour des billes à l'extrémité avant, ou définir une face plane, afin de glisser sur la pièce conjointement avec le plongeur.

Les mouvements du plongeur et du poussoir sont synchronisés de telle sorte que le poussoir suive les mouvements du plongeur en restant à tout instant opposé à celui-ci, en établissant ainsi un appui résistant au point précis où s'effectue l'usinage, ce qui permet d'éviter les déformations de la zone usinée.

Ledit système objet de l'invention résulte par conséquent de certaines caractéristiques constructives et fonctionnelles réellement avantageuses qui lui confèrent ainsi une vie propre et un caractère préféré par rapport aux solutions traditionnelles dans le même domaine d'application.

### Description des figures

La figure 1 montre une perspective de l'ensemble de la tête du système objet de l'invention, mettant en évidence la face de l'élément poussoir.

La figure 2 est une perspective du même ensemble de la tête du système, mettant en évidence la face du plongeur comportant l'outil d'usinage.

Les figures 3, 4, 5 montrent en vue latérale trois positions de la tête dans la disposition de fonctionnement.

La figure 6 est une vue de la disposition de la tête dans la phase de positionnement prévue pour l'usinage.

La figure 7 est une vue de la disposition de la tête avec l'élément poussoir situé en position d'appui sur le panneau à usiner et le plongeur en position élevée.

La figure 8 est une vue de la disposition de la tête avec le plongeur et le poussoir en appui sur le panneau à usiner, avant la réalisation de l'usinage.

La figure 9 est une vue de la disposition de la tête en position de réalisation de l'usinage.

La figure 10 montre en perspective la réalisation pratique d'une installation d'usinage dotée du système objet de l'invention.

La figure 11 est une partie de l'installation de la figure précédente avec l'élément poussoir de la tête en phase de positionnement en vue de l'usinage.

La figure 12 est une perspective identique à celle de la figure précédente avec l'élément poussoir de la tête déplacé vers la zone d'usinage.

La figure 13 montre une perspective de l'installation de la figure 10, avec l'élément poussoir de la tête disposé dans la zone d'usinage.

La figure 14 montre un exemple de réalisation de la tête du système préconisé avec un plongeur doté d'un capteur de hauteur.

Les figures 15 et 16 sont chacune un exemple de réalisation pratique du poussoir composant la tête du système respectivement selon une réalisation assurant un appui roulant et selon une réalisation assurant un appui glissant.

### Description détaillée de l'invention

L'objet de la présente invention a trait à un système destiné aux opérations d'usinage sur des panneaux stratifiés de faible épaisseur, tels que ceux utilisés dans les constructions aéronautiques, lequel système comprend une tête composée de deux éléments opposés permettant de réaliser des opérations d'usinage sur des panneaux stratifiés sans les déformer.

L'ensemble (1) de la tête du système se compose de deux éléments opposés (2 et 3), l'un deux (2), appelé plongeur, servant d'élément opérationnel d'usinage, et l'autre (3), appelé poussoir, servant de matrice par rapport au point où s'effectue l'usinage, de manière à ce que les deux éléments restent en permanence opposés et se déplacent de façon synchronisée par rapport à la pièce à usiner.

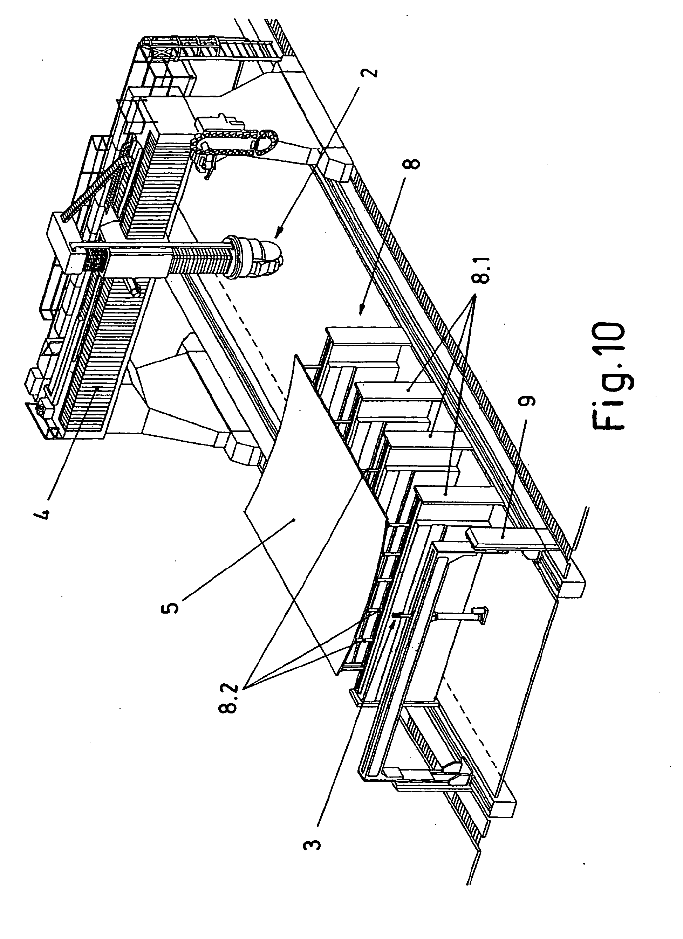

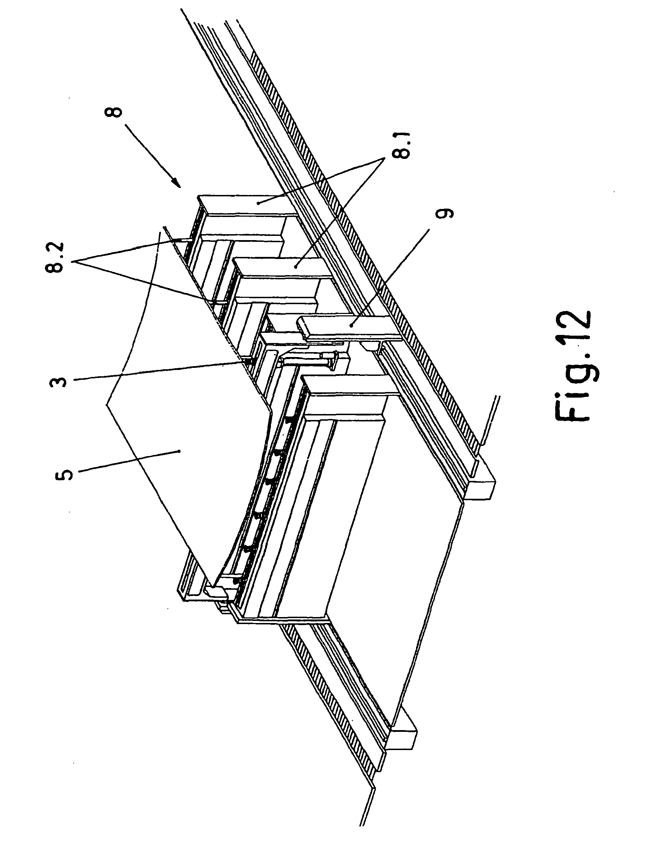

Le plongeur (2) est monté sur un support transporteur qui peut être disposé, par exemple, dans un portique (4) et capable d'effectuer un mouvement longitudinal, transversal, vertical et angulaire, ce qui permet de le positionner par rapport aux points de travail et de réaliser les usinages sur les pièces (5) d'application, comme l'illustrent les figures 10 et 12.

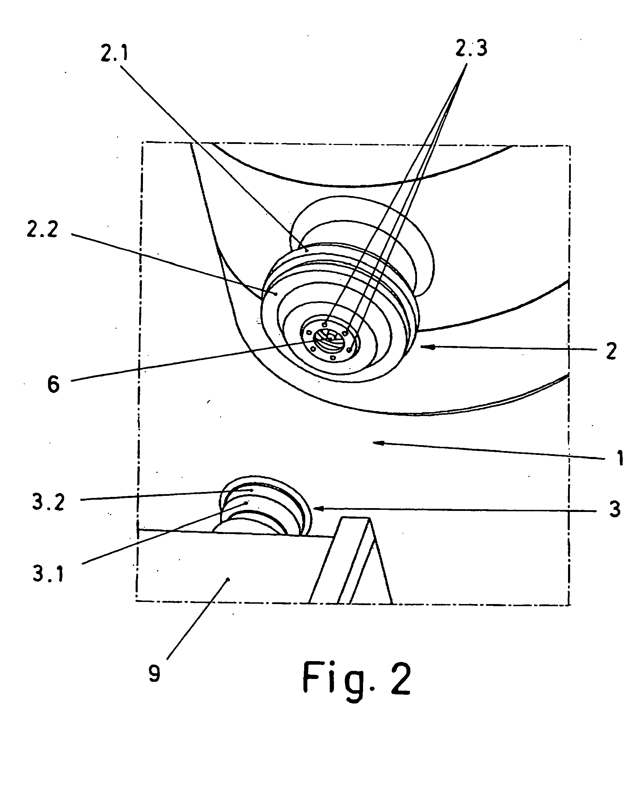

Ledit plongeur (2) se compose d'un ensemble formé d'un socle (2.1) immobile axialement et d'une extrémité (2.2) mobile axialement, lesquels sont unis par des ressorts intermédiaires pour former un couplage télescopique à la manière d'un amortisseur, la partie avant de l'extrémité mobile (2.2) comportant des billes (2.3), et son centre comportant un logement dans lequel est placé un outil (6) pour l'usinage à réaliser, comme l'illustre la figure 2.

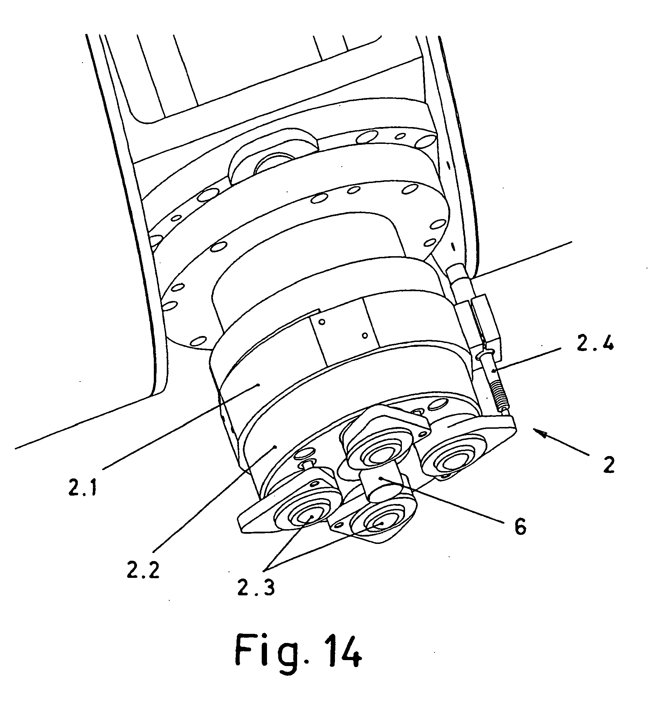

Selon une réalisation pratique, conformément à la figure 14, on place entre le socle immobile (2.1) et l'extrémité mobile (2.2) de l'ensemble susmentionné du plongeur (2) un capteur de hauteur (2.4) qui détecte au cours de l'utilisation de la tête la position de l'extrémité mobile (2.2), ce qui permet de rapprocher avec précision la tête du panneau (5) à usiner et d'entamer l'usinage, en évitant ainsi le creusement excessif du panneau (5) et sa rupture éventuelle, le signal du capteur (2.4) étant pour ce faire envoyé à une commande automatique qui règle la position de l'outil (6) par rapport à la surface de travail.

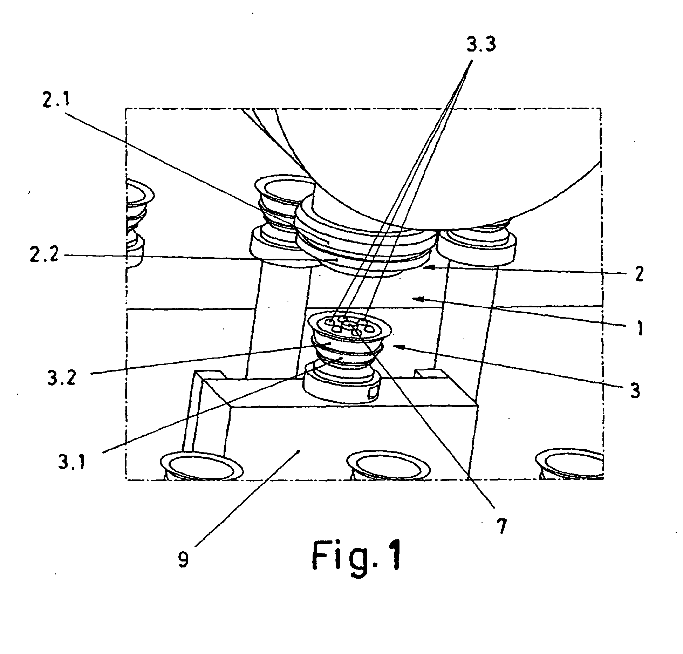

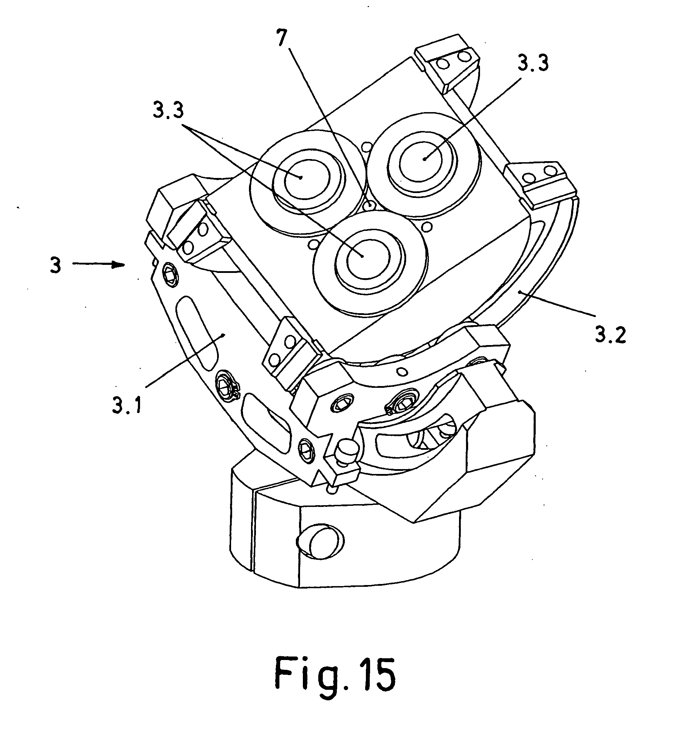

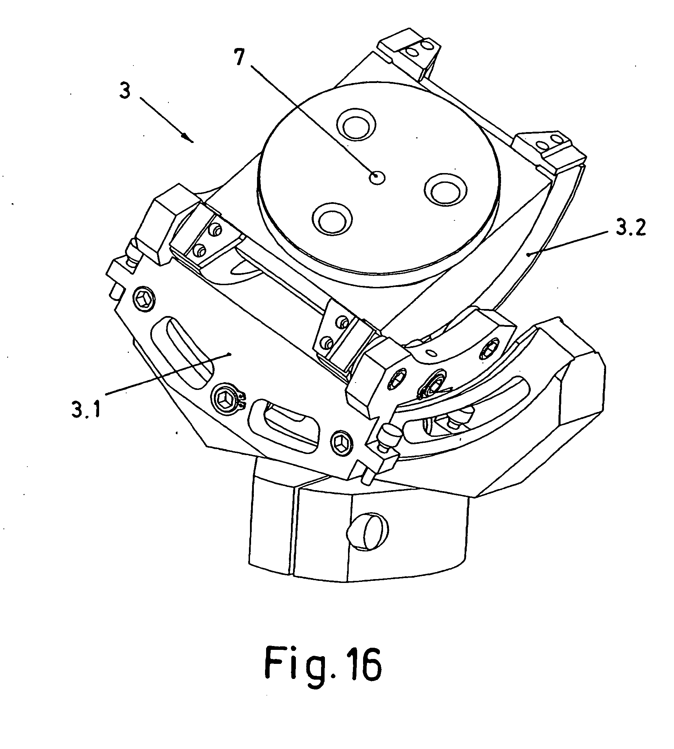

Comme le montre la figure 1, le poussoir (3) se compose pour sa part d'un ensemble formé de deux calottes (3.1 et 3.2), lesquelles sont accouplées pour former un jeu à double rotule, la partie extrême déterminant quant à elle une face d'appui comportant en son centre un élément (7) de mesure capable de déterminer l'épaisseur des panneaux (5) d'application de l'usinage. Dans sa réalisation pratique, cet élément poussoir (3) peut prendre des configurations différentes, par exemple comme le montrent les figures 15 et 16, en comportant à l'avant des billes (3.3) pour établir un appui roulant, comme aux figures 1 et 15, ou bien en définissant une face plane pour établir un appui glissant à frottement, comme à la figure 16.

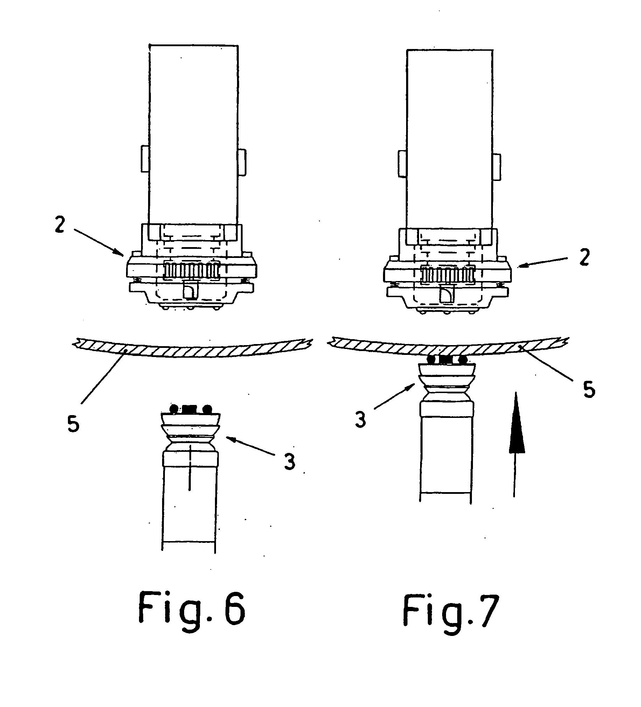

De cette manière, lors de la réalisation pratique de l'usinage, comme le montre en succession les figures 6 à 9, le panneau (5) d'application vient s'appuyer sur le poussoir (3) puis le plongeur (2) vient s'appuyer à son tour sur le panneau (5) pour réaliser l'usinage correspondant.

Au cours de cette opération, en raison de la disposition opposée du poussoir (3) et du plongeur (2), l'effort à exercer pour réaliser l'usinage ne déforme pas le panneau (5), puisqu'il est absorbé par le poussoir (3) servant de matrice résistante.

Le plongeur (2) établit par ailleurs un appui élastique sur le panneau (5) du fait de sa structure télescopique, en maintenant un contact flottant par rapport à la surface du panneau (5) sur laquelle il peut se déplacer par glissement roulant grâce aux billes (2.3) ; tant que le poussoir (3) maintient un appui sur l'autre côté du panneau (5), les efforts de l'usinage continuent d'être absorbés, son élément (7) effectuant simultanément une mesure constante de l'épaisseur du panneau (5) et émettant des signaux pour piloter, au moyen d'une commande automatique, l'actionnement de l'outil (6) du plongeur (2) de façon à ce que l'usinage se fasse selon un programme préétabli.

Les mouvements du plongeur (2) et du poussoir (3) par rapport au panneau (5) d'application sont synchronisés de façon à ce que ces derniers se déplacent ensemble pour tous les mouvements de mise en place par rapport aux points d'usinage, et soient maintenus constamment face à face de part et d'autre du panneau (5).

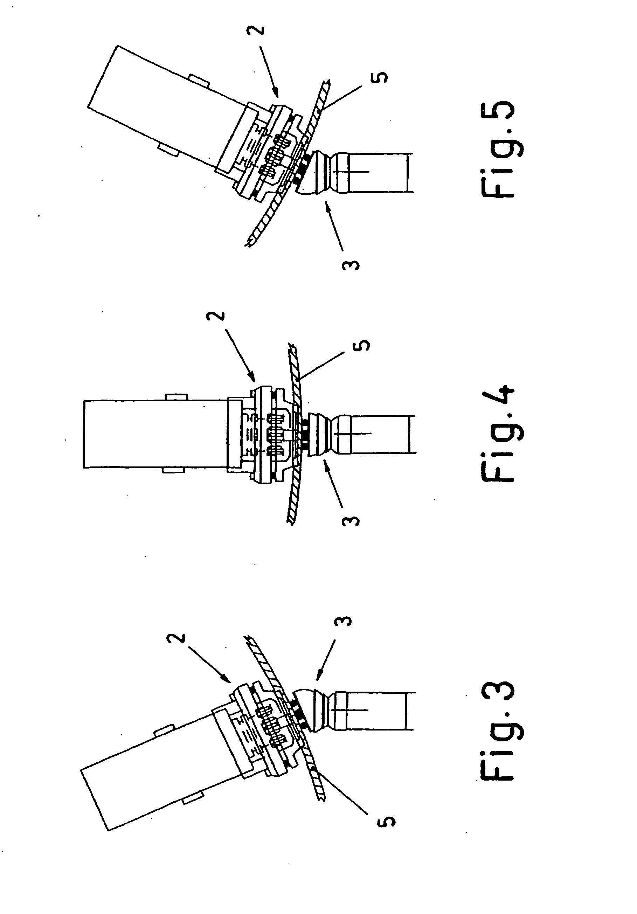

La double rotule de configuration de l'ensemble structurel du poussoir (3) permet d'adapter ledit élément poussoir (3) à chaque zone du panneau (5) à usiner, comme le montrent les figures 3 à 5, ce qui permet d'assurer une précision totale des fonctions de matrice résistante pour l'usinage et de mesure de l'épaisseur du panneau (5) dans la zone d'usinage.

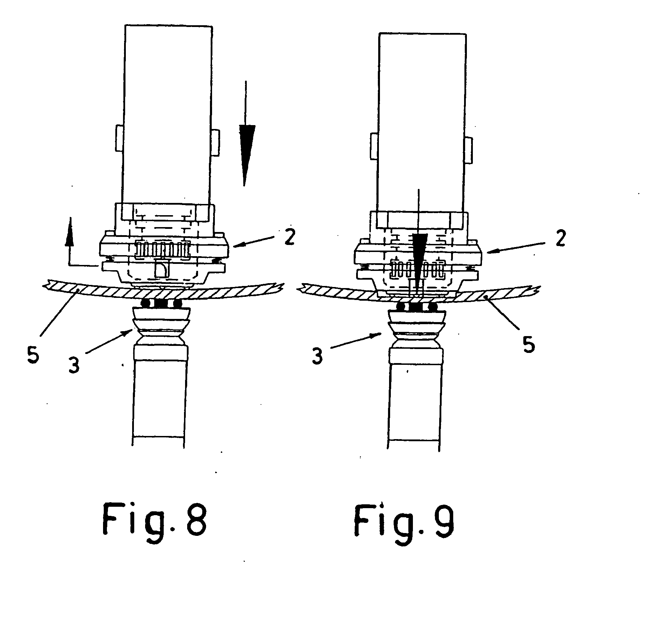

Le fonctionnement de la tête (1) est piloté par un système informatisé, ce qui permet, en fonction des données d'épaisseur recueillies par le poussoir (3) et des paramètres relatifs à la pièce finale conformément à la programmation établie, de réaliser l'usinage du panneau (5) d'application, le plongeur (2) et le poussoir (3) se positionnant en premier lieu par rapport à la zone à usiner, comme le montre la figure 6, le poussoir (3) établissant ensuite un appui sur le panneau (5), comme l'illustre la figure 7, puis le plongeur (2) se plaçant à son tour en appui sur le panneau (5), comme le montre la figure 8, pour réaliser finalement l'usinage, comme le montre la figure 9.

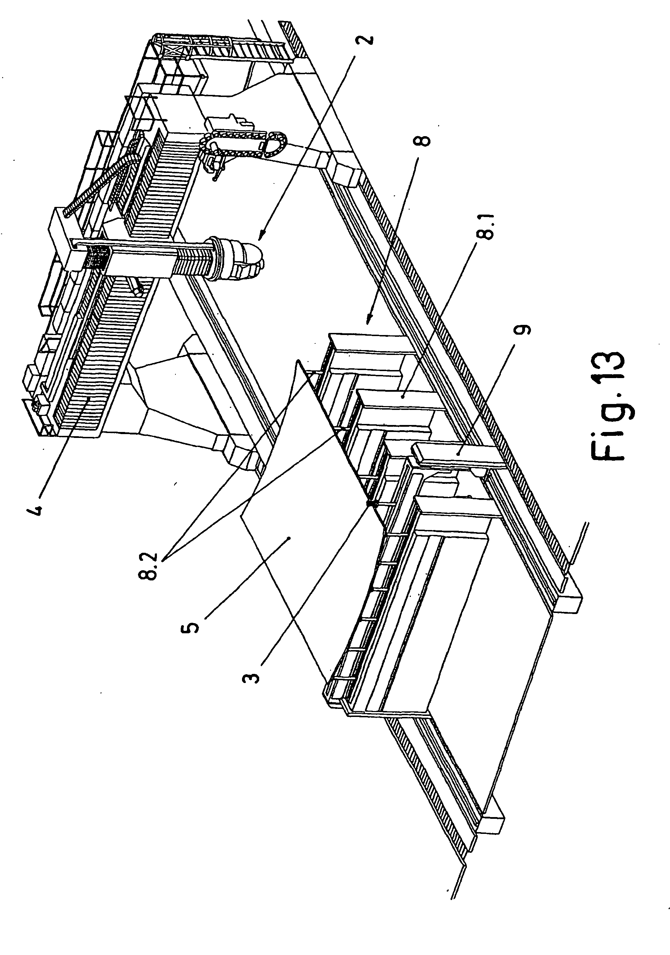

Dans une réalisation pratique, il est prévu de monter l'ensemble de la tête (1) par rapport à un centre d'usinage doté d'une installation de support multiflexible (8), comme celui illustré aux figures 10 et 13, ladite installation de support comprenant une série de modules (8.1) comportant des colonnes télescopiques (8.2) dotées, à leur extrémité, d'un soutien d'appui des panneaux (5) à usiner, de manière à définir dans chaque cas, entre les multiples colonnes télescopiques (8.2), un ensemble d'appui conforme aux formes du panneau (5) d'application.

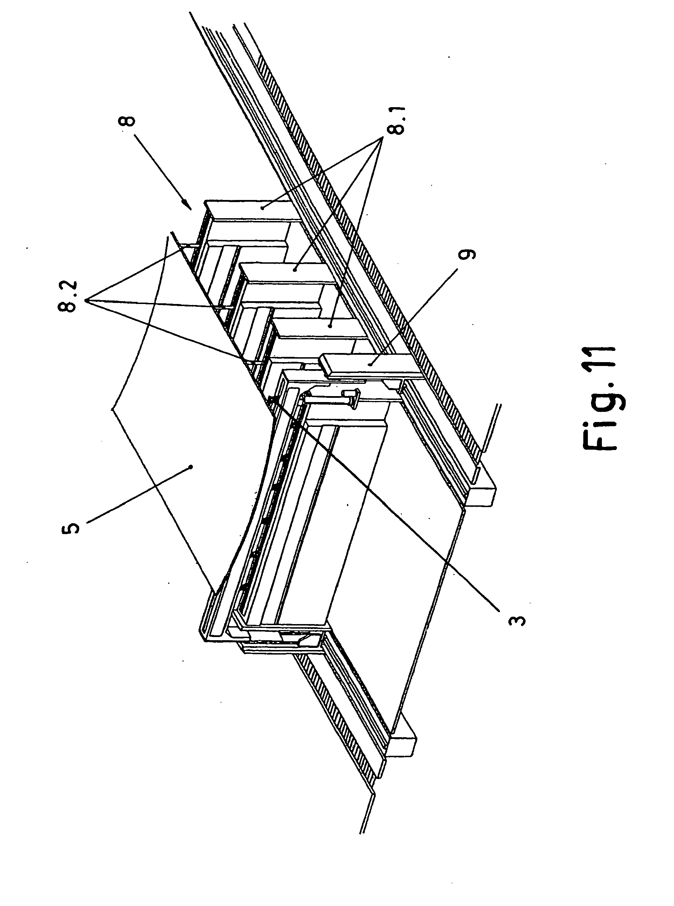

Dans ce cas, le poussoir (3) de l'ensemble de la tête (1) doit être incorporé dans l'installation de façon à pouvoir accéder aux points d'usinage et remplir ainsi sa fonction, sans gêner le soutien du panneau (5) à usiner, si bien que ledit poussoir (3) peut être prévu, par exemple, dans un support mobile (9) se déplaçant longitudinalement, sur lequel il peut effectuer un mouvement transversal, de façon à ce, pour se positionner dans les zones d'usinage, les colonnes (8.2) situées sur le trajet que le support (9) doit emprunter s'abaissent pour dégager le passage, comme le montre la figure 11, lesdites colonnes (8.2) revenant ensuite dans leur position antérieure, comme le montre la figure 12, pour laisser ainsi l'installation dans la disposition permettant d'effectuer l'usinage, comme l'illustre la figure 13.

La disposition mentionnée n'est toutefois pas limitative et d'autres solutions peuvent être envisagées, comme par exemple l'incorporation du poussoir (3) dans un support latéral susceptible de mouvements dans le sens longitudinal et dans le sens transversal, grâce auquel il ne serait pas nécessaire d'escamoter l'une quelconque des colonnes (8.2) mais il suffirait de déplacer le long des trajets requis le support mobile sur lequel le poussoir (3) est replié.

## Revendications

1. Système d'usinage de panneaux stratifiés pour l'usinage de panneaux (5) de faible épaisseur susceptibles d'être déformés par les efforts de l'usinage, se composant d'un ensemble (1) formé de deux éléments (2 et 3) disposés de façon correspondante et opposée d'un côté et de l'autre du panneau (5) d'application aux points d'usinage, l'un d'eux (2) comme porteur de l'outil (6) d'usinage et l'autre (3) comme matrice résistante par rapport aux points où s'effectue l'usinage, **caractérisé en ce que** ce deuxième élément (3) comporte un moyen (7) permettant de mesurer l'épaisseur du panneau (5) d'application dans la zone d'usinage, afin de piloter, au moyen d'une commande automatique, l'actionnement de l'outil (6) en fonction d'une programmation établie.

2. Système d'usinage de panneaux stratifiés selon la revendication 1, **caractérisé en ce que** les deux éléments constitutifs (2 et 3) sont liés entre eux par une série de mouvements synchronisés qui les fait se déplacer ensemble par rapport au panneau (5) d'application, en les maintenant constamment face à face.

3. Système d'usinage de panneaux stratifiés selon la revendication 1, **caractérisé en ce que** l'élément (2) porteur de l'outil (6) d'usinage comprend un ensemble formé d'un socle immobile (2.1) et d'une extrémité (2.2) mobile axialement, lesquels sont liés par des ressorts intermédiaires pour former un couplage télescopique, pour établir ainsi un appui flottant sur le panneau (5) d'application, une face d'appui étant dotée de billes (2.3) pour établir un appui roulant.

4. Système d'usinage de panneaux stratifiés selon la revendication 1, **caractérisé en ce que** l'élément de matrice (3) comprend un ensemble structurel formé de deux calottes (3.1 et 3.2), lesquelles sont disposées selon un couplage définissant un jeu à double rotule, pour permettre d'appuyer sur le panneau (5) d'application dans n'importe quelle position au moyen d'une face d'appui dotée de billes (3.3) en vue d'établir un appui roulant ou au moyen d'une face plane en vue d'établir un appui glissant à frottement.

5. Système d'usinage de panneaux stratifiés selon la revendication 1, **caractérisé en ce que** l'élément de matrice (3) est incorporé dans un montage mobile sur un support (9) qui est à son tour susceptible de se déplacer, dont la combinaison de mouvements permet d'amener ledit élément (3) vers les points d'usinage en préservant le soutien du panneau (5) à usiner.

6. Système d'usinage de panneaux stratifiés selon la revendication 3, **caractérisé en ce qu**'il est disposé entre les parties constitutives (2.1 et 2.2) de l'ensemble télescopique de l'élément (2) un capteur de hauteur (2.4) permettant de régler la position de l'outil (6) par rapport à la surface de travail sur le panneau (5) d'application.

## Claims

1. Stratified panel machining system for machining panels (5) of a small thickness which are susceptible to being deformed through the machining stress, comprising a unit (1) formed by two elements (2 and 3) arranged correspondingly and opposite on either side of the application panel (5) at the machining points, one of them (2) being a carrier for the machining tool (6) and the other (3) being a resistant matrix in relation to the points where the machining is carried out, **characterised in that** this second element (3) comprises a means (7) allowing the measurement of the thickness of the application panel (5) in the machining area in order to guide, by means of an automatic control, the actuation of the tool (6) in dependence upon fixed programming.

2. Stratified panel machining system according to claim 1, **characterised in that** the two constitutive elements (2 and 3) are linked by a series of synchronised movements which cause them to move together relative to the application panel (5), maintaining them constantly facing each other.

3. Stratified panel machining system according to claim 1, **characterised in that** the carrying element (2) of the machining tool (6) comprises a unit formed by an immovable base (2.1) and an axially movable end (2.2) which are connected by intermediate springs so as to form a telescopic coupling, in order to thus form a floating support on the application panel (5), one support face being provided with balls (2, 3) to form a rolling support.

4. Stratified panel machining system according to claim 1, **characterised in that** the matrix element (3) comprises a structural element formed by two cap elements (3.1 and 3.2) which are disposed according to a coupling defining a double ball unit in order to facilitate supporting on the application panel (5) in any position by means of a support face having balls (3.3) for the purpose of forming a rolling support or, by means of a planar face, for the purpose of forming a sliding friction support.

5. Stratified panel machining system according to claim 1, **characterised in that** the matrix element (3) is incorporated into a movable mount on a support (9) which is in turn able to move, whereby the combination of movements thereof allows said element (3) to be guided towards the machining points while maintaining the support of the panel (5) to be machined.

6. Stratified panel machining system according to claim 3, **characterised in that** a height sensor (2.4) is disposed between the constitutive sections (2.1 and 2.2) of the telescopic unit of the element (2), allowing the position of the tool (6) to be controlled relative to the work surface on the application panel (5).

## Patentansprüche

1. System zur Bearbeitung von Schichtplatten, zur Bearbeitung von Platten (5) geringer Stärke, die durch die Kräfte der Bearbeitung verformt werden können, das aus einer von zwei Elementen (2 und 3) gebildeten Anordnung besteht, die einander entsprechend und gegenüberliegend zu beiden Seiten der Werkplatte (5) an den Bearbeitungspunkten angeordnet sind, eines von ihnen (2) als Träger des Bearbeitungswerkszeugs (6) und das andere (3) als bezüglich der Punkte, an denen die Bearbeitung stattfindet, widerstandsfähige Matrize, **dadurch gekennzeichnet, dass** dieses zweite Element (3) eine Einrichtung (7) aufweist, die es ermöglicht, die Stärke der Werkplatte (5) in der Bearbeitungszone zu messen, um mittels einer automatischen Steuerung die Betätigung des Werkzeugs (6) in Abhängigkeit von einer festgelegten Programmierung zu steuern.

2. System zur Bearbeitung von Schichtplatten nach Anspruch 1, **dadurch gekennzeichnet, dass** die beiden Bauteile (2 und 3) durch eine Reihe von synchronisierten Bewegungen miteinander verbunden sind, die sie dazu bringen, sich zusammen bezüglich der Werkplatte (5) zu bewegen, indem sie konstant einander gegenüber gehalten werden.

3. System zur Bearbeitung von Schichtplatten nach Anspruch 1, **dadurch gekennzeichnet, dass** das das Bearbeitungswerkzeug (6) tragende Element (2) eine Anordnung aufweist, die von einem unbeweglichen Sockel (2.1) und von einem axial beweglichen Ende (2.2) gebildet wird, die über Zwischenfedern verbunden sind, um eine Teleskopkopplung zu bilden, um so eine schwimmende Auflage auf der Werkplatte (5) herzustellen, wobei eine Auflageseite mit Kugeln (2.3) versehen ist, um eine rollende Auflage zu bilden.

4. System zur Bearbeitung von Schichtplatten nach Anspruch 1, **dadurch gekennzeichnet, dass** das Matrizenelement (3) eine Aufbauanordnung aufweist, die von zwei Kappen (3.1 und 3.2) gebildet wird, welche gemäß einer Kopplung angeordnet sind, die einen Satz mit doppeltem Kugelgelenk definiert, um es zu ermöglichen, in einer beliebigen Stellung mittels einer mit Kugeln (3.3) versehen Auflageplatte, um eine rollende Auflage herzustellen, oder mittels einer ebenen Seite auf die Werkplatte (5) zu drücken, um eine gleitende Auflage mit Reibung herzustellen.

5. System zur Bearbeitung von Schichtplatten nach Anspruch 1, **dadurch gekennzeichnet, dass** das Matrizenelement (3) in einen beweglichen Zusammenbau auf einem Träger (9) eingegliedert ist, der sich seinerseits verschieben kann, dessen Kombination von Bewegungen es ermöglicht, das Element (3) zu den Bearbeitungspunkten zu bringen, indem das Stützen der zu bearbeitenden Platte (5) erhalten bleibt.

6. System zur Bearbeitung von Schichtplatten nach Anspruch 3, **dadurch gekennzeichnet, dass** zwischen den Bauteilen (2.1 und 2.2) der Teleskopeinheit des Elements (2) ein Höhensensor (2.4) angeordnet ist, der es ermöglicht, die Stellung des Werkzeugs (6) bezüglich der Arbeitsfläche auf der Werkplatte (5) einzustellen.
